# EUROPEAN PATENT APPLICATION

(11) **EP 4 681 953 A1**
(43) Date of publication of application: **21.01.2026**
(21) Application number: 24189324.7
(22) Date of filing: 18.07.2024
(51) Int. Cl.: B60K 17/346, B60K 17/35, F16H 48/10, B60K 17/348

(54) **A TORQUE TRANSFER DEVICE FOR A VEHICLE**

(71) Applicant: VOLVO TRUCK CORPORATION, 405 08 Göteborg (SE)
(72) Inventor: FOLKESSON, Johan, 511 62 SKENE (SE); JOSEFSSON, Axel, 445 36 BOHUS (SE); FALK, Peter, 464 65 BRÅLANDA (SE)
(74) Representative: Kransell & Wennborg KB

(57) **Abstract**

A torque transfer device (1) for distributing torque from an input shaft (2) to a first and a second output shaft (3; 4) driving a first and a second axle of a vehicle, respectively, comprising a planetary gear system (10, 410, 510, 610) and a first shifting device (20) selectively settable to one of a first position, a second position, and a third position, wherein:
- in the first position, it provides increased output torque via the planetary gear system to the first and second output shafts,
- in the second position, it provides increased output torque only to the first output shaft, and
- in the third position, it provides output torque only to the first output shaft, at a direct gear ratio, or at a gear ratio which is lower than in the second position.

## Description

### TECHNICAL FIELD

The disclosure relates generally to powertrains for vehicles. In particular aspects, the disclosure relates to a torque transfer device of a vehicle, a powertrain and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicles with two or more driven axles, a torque transfer device, also known as a transfer case and sometimes referred to as a differential, may be used in addition to a primary transmission for torque transfer from a prime mover to the driven axles. Whereas the primary transmission converts the torque and rotational speed of the prime mover to provide different gear ratios, the torque transfer device is primarily used to split the torque from the primary transmission between the axles. It may be asymmetrical, splitting the torque unequally between the axles, or symmetrical, splitting the torque equally. At each axle, a differential may further be provided via which torque is fed to driven wheels of the vehicle.

### SUMMARY

According to a first aspect of the disclosure, a torque transfer device configured to distribute torque from an input shaft to a first and a second output shaft configured to drive a first and a second axle of a vehicle, respectively, is provided. The torque transfer device comprises a planetary gear system comprising a sun gear, a ring gear, and a planet gear carrier carrying a plurality of planet gears, and a first shifting device selectively settable to one of a first position, a second position, and a third position, wherein:
- in the first position, the torque transfer device is configured to provide output torque via the planetary gear system to the first and second output shafts, the output torques to each one of the output shafts being larger than an input torque provided via the input shaft,
- in the second position, the torque transfer device is configured to provide output torque only to the first output shaft, the output torque being larger than the input torque, and
- in the third position, the torque transfer device is configured to provide output torque only to the first output shaft, at a direct gear ratio, or at a gear ratio which is lower than in the second position.

The first aspect of the disclosure may seek to provide an in at least some aspect improved torque transfer device for distributing torque between axles in a vehicle having two or more axles. In particular, it may seek to provide a torque transfer device which is able to provide different drive modes having different torque distributions between the axles. A technical benefit may include the provision of a torque transfer device that enables shifting between a four-wheel drive mode, offering startability and increased traction in muddy conditions, and at least two different two-wheel drive modes suitable for starting and cruising, respectively. In addition to enabling shifting between four-wheel drive and two-wheel drive, the torque transfer device may thus replace a traditional range gear of the transmission, since it offers the functionality of a low-range gear in the second position and of a high-range gear in the third position. A compact torque transfer device may thereby be achieved, providing at the same time torque increase and the possibility to shift between two-wheel and four-wheel drives.

Optionally in some examples, including in at least one preferred example, the input shaft is drivingly connected to the first output shaft via a first gear and a second gear of the planetary gear system. The first gear hence forms an input gear and the second gear forms an output gear. A technical benefit may include a permanent driving connection between the input shaft and the first output shaft.

Optionally in some examples, including in at least one preferred example, in the first position, the first shifting device is configured to lock the second output shaft for common rotation with a third gear of the planetary gear system. A technical benefit may include selective torque transfer to the second output shaft via the first shifting device to provide a four-wheel drive mode suitable at high gear ratios.

Optionally in some examples, including in at least one preferred example, in the second position, the first shifting device is configured to lock the third gear to a fixed member of the torque transfer device, such as to a housing, and to drivingly disconnect the second output shaft from the third gear. A technical benefit may include selective disconnection of the second output shaft from the input shaft to provide a two-wheel drive mode.

Optionally in some examples, including in at least one preferred example, in the third position, the first shifting device is configured to lock the third gear for common rotation with the first gear and/or with the input shaft, and to drivingly disconnect the second output shaft from the third gear. A technical benefit may include direct torque transfer with reduced friction losses to the first output shaft at cruising conditions.

Optionally in some examples, including in at least one preferred example, the input shaft is fixed for common rotation with the sun gear, or the input shaft is configured to be fixed for common rotation with the sun gear via a second shifting device. A technical benefit may include that a torque increase may thereby be achieved by transferring torque via the planetary gear system. An alternative may be to fix the input shaft for common rotation with the ring gear, although in that way smaller gear ratio steps between the various positions of the first shifting device is achieved. Fixing the input shaft for common rotation with the planet gear carrier is normally not preferred, since less useful gear ratios are provided in this configuration.

Optionally in some examples, including in at least one preferred example, the first output shaft is fixed for common rotation with the planet gear carrier, and the second output shaft is selectively connectable to the ring gear via the first shifting device. A technical benefit may include that the first output shaft will hereby rotate in the same direction as the input shaft in all three positions of the first shifting device. This is advantageous for powertrains in which the input shaft always rotates in the same direction, such as when the prime mover is an internal combustion engine.

Optionally in some examples, including in at least one preferred example, the first shifting device is configured to selectively lock the ring gear to a fixed member of the torque transfer device, such as a housing.

Optionally in some examples, including in at least one preferred example, the first output shaft is fixed for common rotation with the ring gear, and the second output shaft is selectively connectable to the planet gear carrier via the first shifting device. This configuration may primarily be useful when the prime mover is an electric machine which is able to rotate in two directions, since the first output shaft and the input shaft will rotate in opposite directions.

Optionally in some examples, including in at least one preferred example, the input shaft and the first and second output shafts are coaxially arranged. At least one of the shafts may be a hollow shaft.

Optionally in some examples, including in at least one preferred example, the input shaft is a hollow shaft configured to receive the first output shaft. A technical benefit may include that a compact powertrain may be achieved.

Optionally in some examples, including in at least one preferred example, the second output shaft is a hollow shaft configured to receive one of the input shaft and the first output shaft. When the second output shaft is a hollow shaft configured to receive the first output shaft, simplified assembly may be achieved, in particular when the torque transfer device is used to distribute torque between two axles that are both provided on the same side of the prime mover, i.e., on a rearward or forward side thereof.

Optionally in some examples, including in at least one preferred example, the first output shaft is a hollow shaft configured to receive the input shaft. This may be useful if an offset is desired between the input shaft and a driven shaft of the vehicle, since an external gear may be provided on the first output shaft that can in turn be used to drive the driven shaft.

Optionally in some examples, including in at least one preferred example, the torque transfer device further comprises a second shifting device, the first and second shifting devices being configured to selectively shift input gears for torque transfer via the torque transfer device. A technical benefit may include the possibility to achieve an additional gear ratio for torque transfer via the first output shaft. Preferably, the second shifting device may be used together with the first shifting device to shift input gears such that either the sun gear or the ring gear may be used as the input gear, depending on the positions of the first and second shifting devices.

Optionally in some examples, including in at least one preferred example, the second shifting device is selectively settable to one of a locking position in which it locks a first gear of the planetary gear system to a fixed member of the torque transfer device, such as to a housing, and an unlocking position in which it unlocks the first gear from the fixed member and locks it for common rotation with the input shaft.

Optionally in some examples, including in at least one preferred example, the first gear is the sun gear. A technical benefit may include that a torque increase may thereby be achieved by transferring torque via the planetary gear system.

Optionally in some examples, including in at least one preferred example, the torque transfer device is configured to provide four drive modes, comprising:
- a four-wheel drive mode in which the first shifting device is in the first position and the second shifting device is in the unlocking position,
- a low-range drive mode in which the first shifting device is in the second position and the second shifting device is in the unlocking position,
- an underdrive mode in which the first shifting device is in the third position and the second shifting device is in the locking position, and
- a direct drive mode in which the first shifting device is in the third position and the second shifting device is in the unlocking position.

A technical benefit may include a larger selection of available gear ratios and thereby an increased versatility of the torque transfer device.

Optionally in some examples, including in at least one preferred example, at least the first shifting device comprises a sleeve configured to be actuated by an actuating device, such as a shift fork. The second shifting device may also comprise a sleeve configured to be actuated by an actuating device, such as a shift fork.

According to a second aspect of the disclosure, a powertrain for a vehicle is provided. It comprises the torque transfer device of the first aspect, at least one prime mover, and the first and second axles, wherein the input shaft is drivingly connected to the at least one prime mover and wherein the first and second output shafts are arranged for driving the first and the second axles, respectively.

The second aspect of the disclosure may seek to provide an in at least some aspect improved powertrain for a vehicle, such as for a heavy-duty vehicle. In particular, it may seek to provide a powertrain having different drive modes with different torque distributions between the axles. A technical benefit may include the provision of a powertrain that can be set to a four-wheel drive mode, offering startability and increased traction in muddy conditions, or to one of at least two different two-wheel drive modes suitable for starting and cruising, respectively.

According to a third aspect of the disclosure, a vehicle comprising the powertrain of the second aspect is provided. The vehicle may be a heavy-duty vehicle such as a bus, a truck, or a working machine. The vehicle may in some examples be a combination vehicle comprising a towing vehicle and a trailer, in which one of the first and second axles is provided in the towing vehicle, and the other one of the first and second axles is provided in the trailer.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings. The drawings are schematic and not drawn to scale.
**FIG. 1** is an exemplary vehicle according to an example.
**FIG. 2** is an exemplary powertrain according to an example.
**FIG. 3a-3c** illustrate a torque transfer device according to a first example.
**FIG. 4a-4c** illustrate a torque transfer device according to a second example.
**FIG. 5** illustrates a torque transfer device according to a third example.
**FIG. 6a-6d** illustrate a torque transfer device according to a fourth example.
**FIG. 7a-7c** illustrate torque transfer devices according to other examples.
**FIG. 8** is an exemplary powertrain according to another example.

### DETAILED DESCRIPTION

The detailed description set forth below provides information and examples of the disclosed technology with sufficient detail to enable those skilled in the art to practice the disclosure.

A vehicle having a powertrain with two or more driven axles may, apart from a transmission used to convert torque and rotational speed of a prime mover to provide different gear ratios, comprise a torque transfer device, also referred to as a transfer case, that splits the torque between the driven axles. On each driven axle, a differential gear is further provided that distributes the torque from the transfer case to each one of the driven wheels and that allows the driven wheels to rotate at different speeds in curves. The transfer case splitting the torque from the transmission between the axles may be asymmetrical, splitting the torque unequally between the axles, or symmetrical, splitting the torque equally between the axles. In some vehicles, it is possible to shift between four-wheel drive and two-wheel drive, wherein four-wheel drive may be used to provide maximum traction in, e.g., muddy conditions, and two-wheel drive is used during "normal" conditions.

In heavy-duty vehicles, the transmission is usually shiftable between a high-range gear and a low-range gear to extend a speed range obtainable by a primary gear set of the transmission. This functionality may, e.g., be obtained by a planetary gear system provided in connection with the primary gear set. Although maximum traction is usually needed only in connection with high torque, i.e., at the low range gear, and not during regular cruising at high speed, the torque splitting and the torque conversion are usually separate functions using different hardware. The present disclosure seeks to combine the functions of torque splitting and range gear selection.

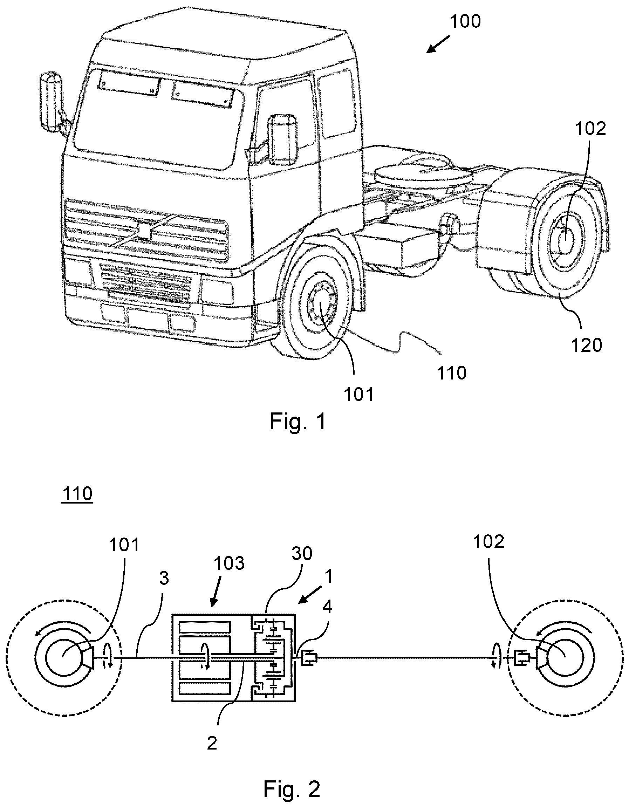

**FIG. 1** illustrates an exemplary vehicle 100 in the form of a towing truck according to an example. It comprises a first axle 101, herein a front axle, comprising first wheels 110. It further comprises a second axle 102, herein a rear axle, comprising second wheels 120. The vehicle 100 may be an electric vehicle, a hybrid vehicle, or a vehicle powered by an internal combustion engine.

**FIG. 2** schematically illustrates a powertrain 110 of a vehicle, such as of the vehicle 100 illustrated in FIG. 1, comprising first and second axles 101, 102. The powertrain 110 further comprises a prime mover 103 in the form of an electric machine configured to provide propulsion power for driving the vehicle 100. The prime mover 103 is drivingly connectable to the axles 101, 102 via a torque transfer device 1. An input shaft 2 transmits the input torque produced by the prime mover 103 to the torque transfer device 1, and the torque is further transmitted to the first axle 101, such as the front axle, via a first output shaft 3, and to the second axle 102, such as the rear axle, via a second output shaft 4. In other examples, the first axle 101 may be a rear axle, and the second axle 102 may be a front axle. A transmission (not shown) may in some cases be provided in addition to the torque transfer device 1, although in the present example when an electric machine is used as the prime mover 103, it may be omitted.

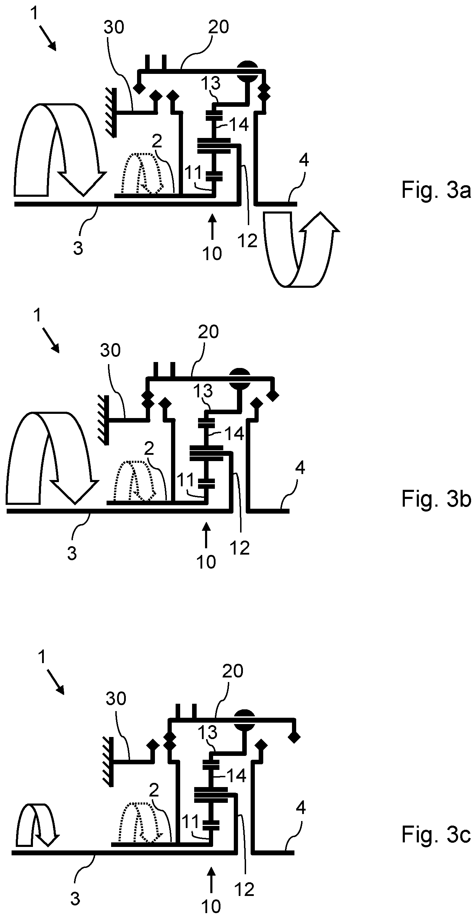

**FIGS. 3a-3c** illustrate the torque transfer device 1 shown in FIG. 2 in greater detail, in three different drive modes including a four-wheel drive mode with good traction, suitable for startability in e.g. muddy conditions (FIG. 3a), a low-range two-wheel drive mode (FIG. 3b), and a high-range, or direct, two-wheel drive mode (FIG. 3c). The torque transfer device 1 comprises a planetary gear system 10 configured to connect the input shaft 2 to the first output shaft 3 and the second output shaft 4. The planetary gear system 10 comprises a sun gear 11, a ring gear 13, and a planet gear carrier 12 carrying a plurality of planet gears 14. A first shifting device 20, which is selectively settable to one of a first position, a second position, and a third position, is further provided. In the example illustrated in FIG. 3, the input shaft 2 is permanently drivingly connected to the sun gear 11, the first output shaft 3 is permanently drivingly connected to the planet gear carrier 12, and the second output shaft 4 is selectively drivingly connectable to the ring gear 13. The input shaft 2 is in the illustrated example a hollow shaft in which the first output shaft 3 is rotatably received.

In the first position of the first shifting device 20, illustrated in FIG. 3a, the torque transfer device 1 is configured to provide output torque via the planetary gear system 10 to both the first and second output shafts 3, 4. The output torques to each one of the output shafts 3, 4 are larger than an input torque provided via the input shaft 2. By "larger" is intended that the magnitudes of the output torques are larger than the magnitude of the input torque. As illustrated in FIG. 3a, the first output shaft 3 rotates in the same direction as the input shaft 2, whereas the second output shaft 4 rotates in the opposite direction, hence the output torques are oppositely directed. The directions of rotation and the relative magnitudes of the torques are illustrated by curved arrows.

With the configuration of the torque transfer device 1 illustrated in FIGS. 3a-3c, in the first position, the first shifting device 20 drivingly connects the ring gear 13 to the second output shaft 4, i.e., it locks the ring gear 13 for common rotation with the second output shaft 4. Torque is transferred from the input shaft 3, via the sun gear 11, the planet gears 14 and the planet gear carrier 12 to the first output shaft 3, and from the input shaft 3 via the sun gear 11, the planet gear carriers 14 and the ring gear 13 to the second output shaft 4.

In the second position of the first shifting device 20, illustrated in FIG. 3b, the torque transfer device 1 is configured to provide output torque only to the first output shaft 3, the output torque being larger than the input torque. To achieve this, the first shifting device 20 locks the ring gear 13 to a fixed member 30 of the torque transfer device, such as to a housing, and drivingly disconnects the second output shaft 4 from the ring gear 13. In this way, torque is transferred from the input shaft 2 via the sun gear 11, the planet gears 14 and the planet gear carrier 12 to the first output shaft 3 at the same gear ratio as in the first position of the first shifting device 20. The direction of the output torque is the same as of the input torque.

In the third position of the first shifting device 20, the torque transfer device 1 is configured to provide output torque only to the first output shaft 3, at a direct gear ratio. To achieve this, the first shifting device 20 locks the ring gear 13 for common rotation with the sun gear 11, and drivingly disconnects the second output shaft 4 from the ring gear 13. Torque is thereby transferred from the input shaft 2 via the locked planetary gear system 10 to the first output shaft 3. The direction of the output torque is the same as of the input torque.

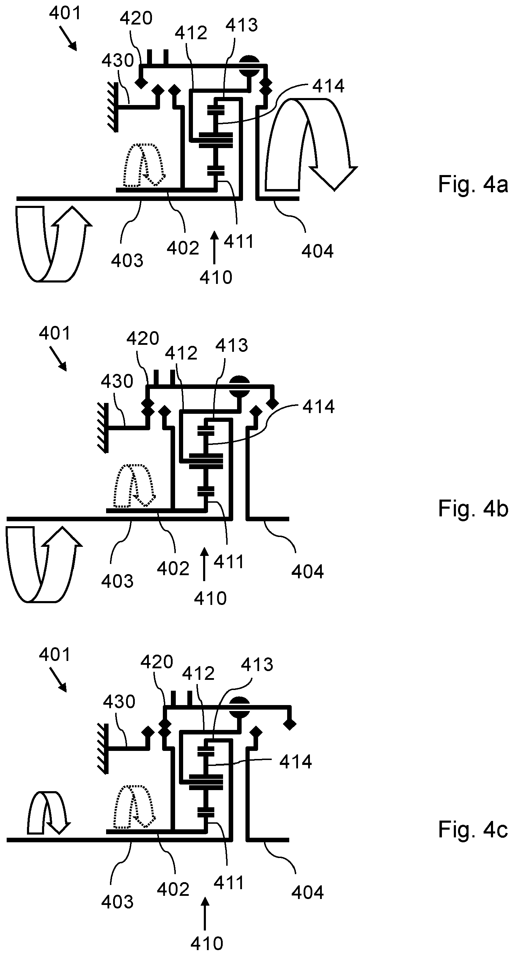

**FIGS. 4a-4c** illustrate another example of a torque transfer device 401 for a vehicle 100 in three different drive modes corresponding to those shown in FIGS. 3a-3c. The torque transfer device 401 comprises a planetary gear system 410 configured to connect the input shaft 402 to the first output shaft 403 and the second output shaft 404. The planetary gear system 410 comprises a sun gear 411, a ring gear 413, and a planet gear carrier 412 carrying a plurality of planet gears 414. A first shifting device 420, which is selectively settable to one of a first position, a second position, and a third position, is further provided.

The torque transfer device 401 illustrated in FIGS. 4a-4c differs from the one illustrated in FIGS. 3a-3c in that the first output shaft 403 is in permanent driving connection with the ring gear 413, and in that the second output shaft 404 is selectively drivingly connectable to the planet gear carrier 412 via the first shifting device 420.

In FIG. 4a, the first shifting device 420 is set to the first position, i.e., a four-wheel drive mode with increased output torque fed to both axles 101, 102 of the vehicle 100 is achieved. To achieve this, the first shifting device 420 fixes the planet carrier 412 for common rotation with the second output shaft 404. Hence, the second output torque fed to the second output shaft 404 will have the same direction as the input torque, whereas the first output torque fed to the first output shaft 403 will be oppositely directed.

In the second position illustrated in FIG. 4b, the first shifting device 420 fixes the planet gear carrier 412 to a fixed member 430, such that rotation of the planet gear carrier 412 is prevented. It further drivingly disconnects the second output shaft 404 from the planet gear carrier 412. Torque is only fed to the first output shaft 403, wherein the output torque is higher than, and oppositely directed to, the input torque.

In the third position illustrated in FIG. 4c, the first shifting device 420 locks the sun gear 411 for common rotation with the planet gear carrier 412. It further drivingly disconnects the second output shaft 404 from the planet gear carrier 412. Torque is thereby transferred from the input shaft 402 via the locked planetary gear system 410 to the first output shaft 403. The direction of the output torque is the same as of the input torque, i.e., opposite to the output torques provided to the first output shaft 403 in the first and second positions, respectively.

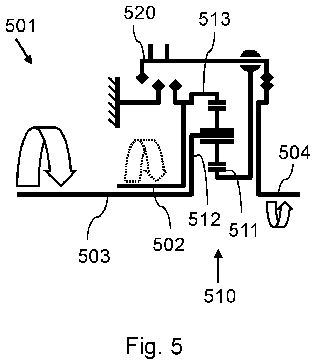

**FIG. 5** illustrates another example of a torque transfer device 501. The torque transfer device illustrated in FIG. 5 differs from the one illustrated in FIGS. 3a-3c in that the input shaft 502 is in permanent driving connection with the ring gear 513, and the second output shaft 504 is selectively drivingly connectable to the sun gear 511 via the first shifting device 520. Similarly to the example illustrated in FIGS. 3a-3c, the first output shaft 503 is in permanent driving connection with the ring gear 513, and is rotatably received in the input shaft 502. FIG. 5 illustrates the first position of the first shifting device 520, i.e., the four-wheel drive mode. The second and third positions (not illustrated), corresponding to the low-range two-wheel drive mode and the direct two-wheel drive mode, respectively, are achieved as described with reference to FIGS. 3a-3c. In comparison with the example illustrated in FIGS. 3a-3c, the torque transfer device 501 will have a smaller step in gear ratios between the second and third positions of the first shifting device 520.

In other examples, not illustrated, it is possible to connect the input shaft to the planet gear carrier and connect the output shafts to the ring gear and the sun gear, respectively. However, this will result in an overdrive gear ratio, i.e., reduced torque, in the second position of the first shifting device.

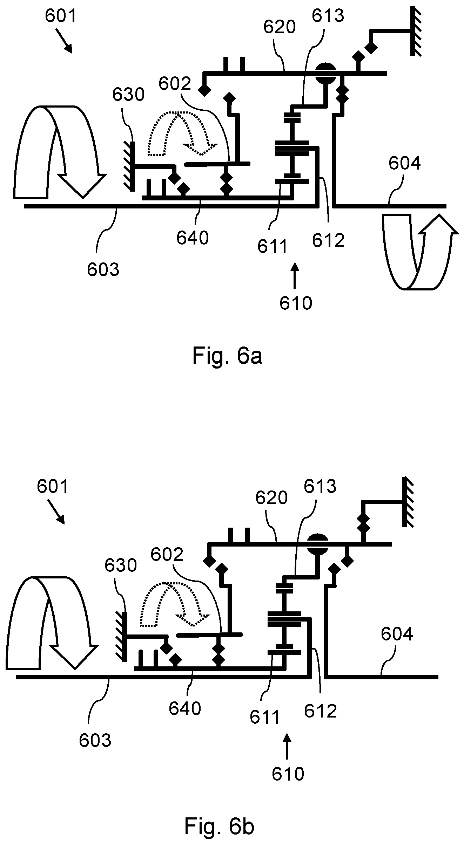

**FIGS. 6a-6d** illustrate yet another example of a torque transfer device 601, which is similar to the example illustrated in FIGS. 3a-3c but in which a second shifting device 640 is provided in addition to the first shifting device 620. In this way, four drive modes can be achieved instead of three, as illustrated in FIGS. 6a-6d, respectively.

The second shifting device 640 is herein formed in fixed connection with the sun gear 611, such that it moves the sun gear 611 back and forth along an axial direction and selectively connects it to the input shaft 602. The first and second shifting devices 620, 640 are configured to selectively shift input gears for torque transfer via the torque transfer device 601.

The second shifting device 640 is selectively settable to one of a locking position in which it locks the sun gear 611 of the planetary gear system 610 to a fixed member 630 of the torque transfer device 601, such as to a housing thereof, and an unlocking position in which it unlocks the sun gear 611 from the fixed member 630 and instead locks it for common rotation with the input shaft 602.

FIG. 6a illustrates the torque transfer device 601 in a first drive mode in the form of a four-wheel drive mode in which both output shafts 603, 604 are driven. The first shifting device 620 is in the first position, drivingly connecting the ring gear 613 to the second output shaft 604. The second shifting device 640 is in the unlocking position.

FIG. 6b illustrates a second drive mode in the form of a low-range drive mode, in which the first shifting device 620 is in the second position and the second shifting device 640 is in the unlocking position. Only the first output shaft 603 is driven.

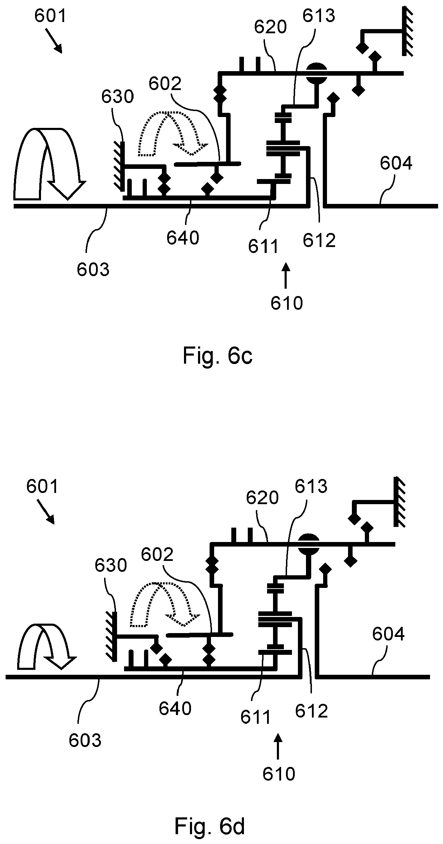

FIG. 6c illustrates a third drive mode in the form of an underdrive mode in which the first shifting device 620 is in the third position, locking the ring gear 613 for common rotation with the input shaft 602 and drivingly disconnecting the second output shaft 604 from the ring gear 613. The second shifting device 640 is in the locking position. This means that input torque is fed to the ring gear 613 instead of to the sun gear 611. Only the first output shaft 603 is driven. The output torque is lower than the output torque provided in the second drive mode, but higher than in a direct drive mode.

FIG. 6d illustrates a fourth drive mode in the form of a direct drive mode in which the first shifting device 620 is in the third position, locking the ring gear 613 for common rotation with the input shaft 602 and drivingly disconnecting the second output shaft 604 from the ring gear 613. The second shifting device 640 is in the unlocking position. Only the first output shaft 603 is driven at a direct gear ratio.

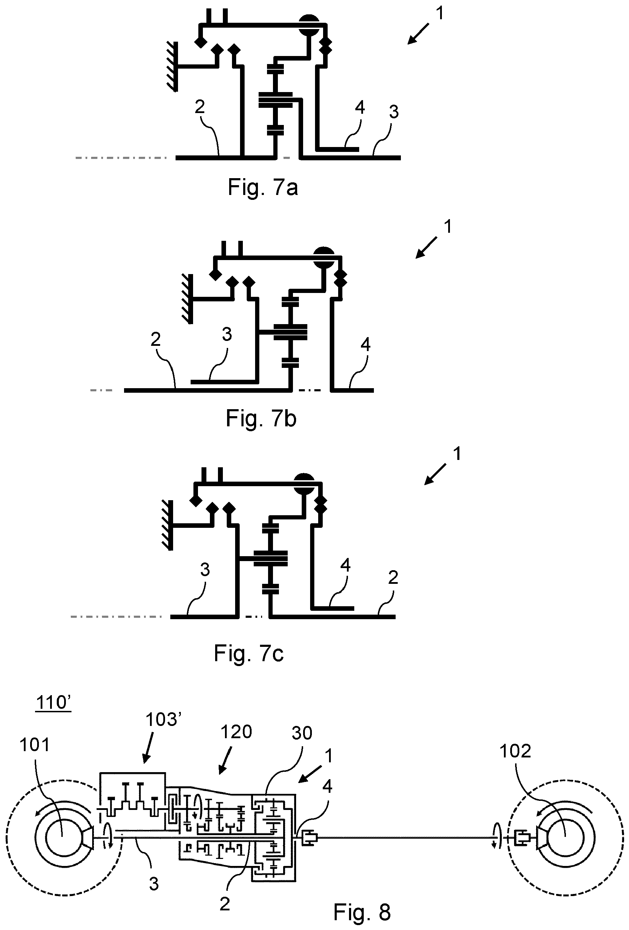

**FIG. 7a-7c** show alternative configurations of the torque transfer device 1 illustrated in FIGS. 3a-3c, in which the input shaft 2, the first output shaft 3 and the second output shaft 4 are arranged differently than in the example illustrated in FIGS. 3a-3c. FIG. 7a shows a first alternative, in which the second output shaft 4 is a hollow shaft rotatably receiving the first output shaft 3. FIG. 7b shows a second alternative, in which the first output shaft 3 is a hollow shaft rotatably receiving the input shaft 2. FIG. 7c shows a third alternative, in which the second output shaft 4 is a hollow shaft, rotatably receiving the input shaft 2.

The first and second shifting devices may in all examples be controlled, i.e., moved axially back and forth, by use of one or more actuators (not shown), such as hydraulic, electronic or pneumatic actuators. The one or more actuators may be automatically controlled by a transmission control unit (not shown) and/or controlled based on input from a user, e.g., a driver of the vehicle 100. Respective shift forks (not shown) may further be provided in-between the first and second shifting devices and the one or more actuators. The first and second shifting devices may be in the form of sleeves.

**FIG. 8** illustrates an alternative configuration of a powertrain 110' of a vehicle, such as of the vehicle 100 illustrated in FIG. 1, comprising first and second axles 101, 102. The powertrain 110' comprises a prime mover 103' in the form of an internal combustion engine configured to provide propulsion power for driving the vehicle 100. The prime mover 103' is drivingly connectable to the axles 101, 102 via a torque transfer device 1. An input shaft 2 transmits input torque produced by the prime mover 103' and converted in a transmission 120 to the torque transfer device 1. The torque is further transmitted to the first axle 101, such as the front axle, via a first output shaft 3, and to the second axle 102, such as the rear axle, via a second output shaft 4.

Although the vehicle 100 is herein illustrated in the form of a towing truck, the vehicle may be any kind of vehicle in which it is desirable to split torque between at least two axles, such as a truck, a bus, or a working machine. The vehicle may in some examples comprise a tandem rear axle, wherein one of the output shafts 3, 4 may drive the tandem rear axle. In other examples, the vehicle may be a combination vehicle comprising a towing vehicle and a trailer, wherein the first axle is provided on the towing vehicle and the second axle is provided on the trailer.

In the following, possible features and feature combinations of the present disclosure are presented as a list of numbered examples:
Example 1. A torque transfer device (1, 401, 501, 601) configured to distribute torque from an input shaft (2, 402, 502, 602) to a first and a second output shaft (3, 403, 503, 603; 4, 404, 504, 604) configured to drive a first and a second axle (101, 102) of a vehicle (100), respectively, wherein the torque transfer device comprises a planetary gear system (10, 410, 510, 610) comprising a sun gear (11, 411, 511), a ring gear (13, 413, 513), and a planet gear carrier (12, 412, 512) carrying a plurality of planet gears (14, 414), and a first shifting device (20, 420, 520, 620) selectively settable to one of a first position, a second position, and a third position, wherein:
   - in the first position, the torque transfer device (1, 401, 501, 601) is configured to provide output torque via the planetary gear system (10, 410, 510, 610) to the first and second output shafts (3, 403, 503, 603; 4, 404, 504, 604), the output torques to each one of the output shafts (3, 403, 503, 603; 4, 404, 504, 604) being larger than an input torque provided via the input shaft (2),
   - in the second position, the torque transfer device (1, 401, 501, 601) is configured to provide output torque only to the first output shaft (3, 403, 503, 603), the output torque being larger than the input torque, and
   - in the third position, the torque transfer device (1, 401, 501, 601) is configured to provide output torque only to the first output shaft (3, 403, 503, 603), at a direct gear ratio, or at a gear ratio which is lower than in the second position.
Example 2. The torque transfer device of claim 1, wherein the input shaft (2, 402, 502, 602) is drivingly connected to the first output shaft (3, 403, 503, 603) via a first gear (11, 411, 513, 611) and a second gear (12, 413, 512, 612) of the planetary gear system (10, 410, 510, 610).
Example 3. The torque transfer device of claim 1 or 2, wherein, in the first position, the first shifting device (20, 420, 520, 620) is configured to lock the second output shaft (4, 404, 504, 604) for common rotation with a third gear (13, 412, 511, 613) of the planetary gear system (10, 410, 510, 610).
Example 4. The torque transfer device of claim 3, wherein, in the second position, the first shifting device (20, 420, 520, 620) is configured to lock the third gear (13, 412, 511, 613) to a fixed member (30, 430, 630) of the torque transfer device (1, 401, 501, 601), such as to a housing, and to drivingly disconnect the second output shaft (4, 404, 504, 604) from the third gear (13, 412, 511, 613).
Example 5. The torque transfer device of claim 3 or 4, wherein, in the third position, the first shifting device (20, 420, 520, 620) is configured to lock the third gear (13, 412, 511, 613) for common rotation with the first gear (11, 411, 513) and/or with the input shaft (2, 402, 502, 602), and to drivingly disconnect the second output shaft (4, 404, 504, 604) from the third gear (13, 412, 511, 613).
Example 6. The torque transfer device of any one of the preceding claims, wherein the input shaft (2, 402) is fixed for common rotation with the sun gear (11, 411), or wherein the input shaft (602) is configured to be fixed for common rotation with the sun gear (611) via a second shifting device (640).
Example 7. The torque transfer device of claim 6, wherein the first output shaft (3, 503, 603) is fixed for common rotation with the planet gear carrier (12, 512, 612), and wherein the second output shaft (4, 504, 604) is selectively connectable to the ring gear (13, 513, 613) via the first shifting device (20, 520, 620).
Example 8. The torque transfer device of claim 7, wherein the first shifting device (20) is configured to selectively lock the ring gear (13, 513, 613) to a fixed member (30, 630) of the torque transfer device (1, 501, 601), such as a housing.
Example 9. The torque transfer device of claim 6, wherein the first output shaft (403) is fixed for common rotation with the ring gear (413), and wherein the second output shaft (404) is selectively connectable to the planet gear carrier (412) via the first shifting device (420).
Example 10. The torque transfer device of any one of the preceding claims, wherein the input shaft (2, 402, 502, 602) and the first and second output shafts (3, 403, 503, 603; 4, 404, 504, 604) are coaxially arranged.
Example 11. The torque transfer device of any one of the preceding claims, wherein the input shaft (2, 402, 502, 602) is a hollow shaft configured to receive the first output shaft (3, 403, 503, 603).
Example 12. The torque transfer device of any one of claims 1-10, wherein the second output shaft (4) is a hollow shaft configured to receive one of the input shaft (2) and the first output shaft (4).
Example 13. The torque transfer device of any one of claims 1-10, wherein the first output shaft (3) is a hollow shaft configured to receive the input shaft (2).
Example 14. The torque transfer device of any one of the preceding claims, further comprising a second shifting device (640), the first and second shifting devices (620, 640) being configured to selectively shift input gears for torque transfer via the torque transfer device (601).
Example 15. The torque transfer device of claim 14, wherein the second shifting device (640) is selectively settable to one of a locking position in which it locks a first gear (611) of the planetary gear system (610) to a fixed member (630) of the torque transfer device (601), such as to a housing, and an unlocking position in which it unlocks the first gear (611) from the fixed member (630) and locks it for common rotation with the input shaft (602).
Example 16. The torque transfer device of claim 15, wherein the first gear (611) is the sun gear.
Example 17. The torque transfer device of claim 15 or 16, wherein the torque transfer device (601) is configured to provide four drive modes, comprising:
   - a four-wheel drive mode in which the first shifting device (620) is in the first position and the second shifting device (640) is in the unlocking position,
   - a low-range drive mode in which the first shifting device (620) is in the second position and the second shifting device (640) is in the unlocking position,
   - an underdrive mode in which the first shifting device (620) is in the third position and the second shifting device (640) is in the locking position, and
   - a direct drive mode in which the first shifting device (620) is in the third position and the second shifting device (640) is in the unlocking position.
Example 18. The torque transfer device of any one of the preceding claims, wherein at least the first shifting device (620) comprises a sleeve configured to be actuated by an actuating device, such as a shift fork.
Example 19. A powertrain (110) for a vehicle, comprising the torque transfer device of any one of the preceding claims, at least one prime mover (103), and the first and second axles (101, 102), wherein the input shaft (2) is drivingly connected to the at least one prime mover (103) and wherein the first and second output shafts (3, 4) are arranged for driving the first and the second axles (101, 102), respectively.
Example 20. A vehicle (100) comprising the powertrain (110) of claim 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A torque transfer device (1, 401, 501, 601) configured to distribute torque from an input shaft (2, 402, 502, 602) to a first and a second output shaft (3, 403, 503, 603; 4, 404, 504, 604) configured to drive a first and a second axle (101, 102) of a vehicle (100), respectively, wherein the torque transfer device comprises a planetary gear system (10, 410, 510, 610) comprising a sun gear (11, 411, 511), a ring gear (13, 413, 513), and a planet gear carrier (12, 412, 512) carrying a plurality of planet gears (14, 414), and a first shifting device (20, 420, 520, 620) selectively settable to one of a first position, a second position, and a third position, wherein:
- in the first position, the torque transfer device (1, 401, 501, 601) is configured to provide output torque via the planetary gear system (10, 410, 510, 610) to the first and second output shafts (3, 403, 503, 603; 4, 404, 504, 604), the output torques to each one of the output shafts (3, 403, 503, 603; 4, 404, 504, 604) being larger than an input torque provided via the input shaft (2),
- in the second position, the torque transfer device (1, 401, 501, 601) is configured to provide output torque only to the first output shaft (3, 403, 503, 603), the output torque being larger than the input torque, and
- in the third position, the torque transfer device (1, 401, 501, 601) is configured to provide output torque only to the first output shaft (3, 403, 503, 603), at a direct gear ratio, or at a gear ratio which is lower than in the second position.

2. The torque transfer device of claim 1, wherein the input shaft (2, 402, 502, 602) is drivingly connected to the first output shaft (3, 403, 503, 603) via a first gear (11, 411, 513, 611) and a second gear (12, 413, 512, 612) of the planetary gear system (10, 410, 510, 610).

3. The torque transfer device of claim 1 or 2, wherein, in the first position, the first shifting device (20, 420, 520, 620) is configured to lock the second output shaft (4, 404, 504, 604) for common rotation with a third gear (13, 412, 511, 613) of the planetary gear system (10, 410, 510, 610).

4. The torque transfer device of claim 3, wherein, in the second position, the first shifting device (20, 420, 520, 620) is configured to lock the third gear (13, 412, 511, 613) to a fixed member (30, 430, 630) of the torque transfer device (1, 401, 501, 601), such as to a housing, and to drivingly disconnect the second output shaft (4, 404, 504, 604) from the third gear (13, 412, 511, 613).

5. The torque transfer device of claim 3 or 4, wherein, in the third position, the first shifting device (20, 420, 520, 620) is configured to lock the third gear (13, 412, 511, 613) for common rotation with the first gear (11, 411, 513) and/or with the input shaft (2, 402, 502, 602), and to drivingly disconnect the second output shaft (4, 404, 504, 604) from the third gear (13, 412, 511, 613).

6. The torque transfer device of any one of the preceding claims, wherein the input shaft (2, 402) is fixed for common rotation with the sun gear (11, 411), or wherein the input shaft (602) is configured to be fixed for common rotation with the sun gear (611) via a second shifting device (640).

7. The torque transfer device of claim 6, wherein the first output shaft (3, 503, 603) is fixed for common rotation with the planet gear carrier (12, 512, 612), and wherein the second output shaft (4, 504, 604) is selectively connectable to the ring gear (13, 513, 613) via the first shifting device (20, 520, 620).

8. The torque transfer device of claim 7, wherein the first shifting device (20) is configured to selectively lock the ring gear (13, 513, 613) to a fixed member (30, 630) of the torque transfer device (1, 501, 601), such as a housing.

9. The torque transfer device of claim 6, wherein the first output shaft (403) is fixed for common rotation with the ring gear (413), and wherein the second output shaft (404) is selectively connectable to the planet gear carrier (412) via the first shifting device (420).

10. The torque transfer device of any one of the preceding claims, wherein the input shaft (2, 402, 502, 602) and the first and second output shafts (3, 403, 503, 603; 4, 404, 504, 604) are coaxially arranged.

11. The torque transfer device of any one of the preceding claims, wherein the input shaft (2, 402, 502, 602) is a hollow shaft configured to receive the first output shaft (3, 403, 503, 603).

12. The torque transfer device of any one of the preceding claims, further comprising a second shifting device (640), the first and second shifting devices (620, 640) being configured to selectively shift input gears for torque transfer via the torque transfer device (601).

13. The torque transfer device of claim 12, wherein the second shifting device (640) is selectively settable to one of a locking position in which it locks a first gear (611) of the planetary gear system (610) to a fixed member (630) of the torque transfer device (601), such as to a housing, and an unlocking position in which it unlocks the first gear (611) from the fixed member (630) and locks it for common rotation with the input shaft (602).

14. A powertrain (110) for a vehicle, comprising the torque transfer device of any one of the preceding claims, at least one prime mover (103), and the first and second axles (101, 102), wherein the input shaft (2) is drivingly connected to the at least one prime mover (103) and wherein the first and second output shafts (3, 4) are arranged for driving the first and the second axles (101, 102), respectively.

15. A vehicle (100) comprising the powertrain (110) of claim 14.
